# EUROPÄISCHE PATENTANMELDUNG

(11) **EP 2 587 033 A2**
(43) Veröffentlichungstag der Anmeldung: **01.05.2013**
(21) Anmeldenummer: 12186758.4
(22) Anmeldetag: 01.10.2012
(51) Int. Cl.: F02D 35/02, F02D 41/00, F02D 41/14, F02D 37/02, F02P 5/04, F02M 25/07

(54) **Verfahren zur Klopfregelung an einer Brennkraftmaschine**

(30) Priorität: 26.10.2011 DE 102011116956
(71) Anmelder: Vaillant GmbH, 42859 Remscheid (DE)
(72) Erfinder: Forner, Pascal, 42855 Remscheid (DE)
(74) Vertreter: Hocker, Thomas

(57) **Zusammenfassung**

Die Erfindung betrifft ein Verfahren zur Klopfregelung an einer Brennkraftmaschine, insbesondere an einer in einem Blockheizkraftwerk verwendeten gasbetriebenen Brennkraftmaschine. Mittels eines Sensors (6, 2) wird die Möglichkeit des Auftretens von Klopfen ermittelt. Beim Auftreten oder beim möglichen Auftreten von Klopfen wird gekühltes Abgas zurückgeführt.

## Beschreibung

Die Erfindung betrifft ein Verfahren zur Klopfregelung an einer Brennkraftmaschine, insbesondere an einer in einem Blockheizkraftwerk verwendeten mit Gas betriebenen Brennkraftmaschine.

Es ist bekannt, dass in dem Verbrennungsraum einer Brennkraftmaschine zum so genannten Klopfen kommen kann. Das Klopfen ist das Ergebnis mehrerer ungünstiger Faktoren die zu einer nicht kontrollierten Selbstendzündung des Gases führen. Dies kann sowohl zu thermischen als auch mechanischen Belastungen des Motors führen. Die Gründe können verschieden sein oder eine Kombination mehrerer kann den klopfenden Betrieb verursachen.

Bei einem Viertaktmotor wird im dritten Takt nach Verdichtung des Gasgemisches dieses mit Hilfe eines Zündfunkens gezündet. Vor der sich relativ langsam fortbewegenden Flammenfront befindet sich eine Druckfront, welche das Endgas verdichtet und somit dessen Druck und Temperatur erhöht. Erreichen Druck und Temperatur Parameter die für die Zündung des Gasgemisches im Endgas ausreichen, so kommt es an dieser Stelle zu nicht beabsichtigten Selbstendzündungen. Das Klopfen hat verschiedene Ursachen, wobei jedoch immer die Überschreitung der Selbstzündungstemperatur des Gases eine Rolle spielt. Diese liegt bei Methan bei circa 923°C.

Das Klopfen im Gasmotor hängt nicht nur von den Einflüssen des Motors ab, sondern das zu verbrennende Gas selbst hat einen wesentlichen Einfluss auf die Klopfneigung während des Verbrennungsprozess im Ottomotor. Das deutsche Erdgas ist zunächst in die 2 Gasgruppen L- Gas und H - Gas eingeteilt. Die Kenngröße um speziell die Klopffestigkeit eines Gases zu beschreiben ist die Methanzahl eines Gases. Da das Augenmerk der Gaslieferanten jedoch in erster Linie auf die Heizung und Warmwasserbereitung gerichtet ist, weisen die für den Betrieb von Blockheizkraftwerken verfügbaren Gase sehr unterschiedliche Methanzahlen auf, die sich aufgrund unterschiedlicher Gasbestandteile ergeben. Daher ist es vorteilhaft, dass die Brennkraftmaschine eines Blockheizkraftwerkes über eine Klopfregelung verfügt.

Aus dem Motorenbau für Kraftfahrzeuge sind verschiedene Ansätze bekannt. Üblich ist eine Verstellung des Zündwinkels, sobald ein Klopfen sensiert wird. Dazu wird ein auf einem Körperschallsensor oder Beschleunigungssensor basierender Klopfsensor eingesetzt. Sobald das Klopfen sensiert wird, wird der Zündwinkel so verstellt, dass die Zündung später erfolgt. Wird hingegen kein Klopfen sensiert, wird der Zündwinkel so verstellt, dass die Zündung früher erfolgt, bis die Klopfgrenze erreicht ist. Damit tastet sich die Klopfregelung kontinuierlich an die Klopfgrenze heran. Die Offenlegungsschriften DE 100 43 693 A1 und DE 100 43 700 A1 beschreiben darüber hinaus weitere Zusatzmaßnahmen, die ergriffen werden können, wenn der Verstellwinkel des Zündwinkles einen Schwellwert überschritten hat.

Nachteil des Standes der Technik ist, dass diese Art der Klopfregelung zwar wenig Einfluss auf die maximale Leistung des Verbrennungsmotors hat, jedoch mit einem schlechteren Wirkungsgrad einhergeht. Dies mag für Kraftfahrzeuge im Nennbetriebspunkt d.h. im Betriebspunkt mit der maximalen Leistung tolerierbar und sogar gewünscht sein. Für Blockheizkraftwerke ist jedoch der Wirkungsgrad wichtiger als die maximale Leistung. Darüber hinaus werden Verbrennungsmotoren in Blockheizkraftwerken in der Regel dauerhaft mit Nennmoment und damit mit maximalem Mitteldruck betrieben, weshalb ständig die Gefahr des Klopfens besteht.

Es ist daher Aufgabe der Erfindung, ein Verfahren zur Klopfregelung an einer in einem Blockheizkraftwerk verwendeten mit Gas betriebenen Brennkraftmaschine.bereitzustellen, das eine Klopfregelung ohne Verschlechterung des Wirkungsgrades ermöglicht.

Diese Aufgabe wird durch ein Verfahren gemäß den Merkmalen des Anspruchs 1 gelöst. Vorteilhafte Ausgestaltungen ergeben sich durch die Merkmale der abhängigen Ansprüche.

Durch die Zurückführung von gekühltem Abgas kann die Klopfneigung verringert werden. Es ist zwar grundsätzlich der Zusammenhang zwischen der Rückführung von Abgas und der Klopfneigung aus den Offenlegungsschriften DE 100 43 693 A1 und DE 100 43 700 A1 bekannt. Dort wird jedoch vorgeschlagen, Abgas nur als ergänzende Hilfs-Maßnahme zusätzlich zur Klopfregelung per Zündverstellung zurückzuführen. Die Änderung des Zündwinkels als Hauptmaßnahme und die Rückführung von Abgas als Zusatzmaßnahme ist jedoch nicht geeignet, die Aufgabenstellung zu lösen. Gegen den Einsatz einer Abgasrückführung als alleinige Maßnahme oder als Hauptmaßnahme bestehen offensichtlich Vorbehalte. Es hat sich aber herausgestellt, dass die Rückführung von gekühltem Abgas sich besonders vorteilhaft für eine Klopfregelung bei gleich bleibend hohem Wirkungsgrad eignet. Die Rückführung von gekühltem Abgas hat gegenüber ungekühltem Abgas den Vorteil, dass dies die Temperatur des Gasgemischs im Brennraum reduziert. Zum anderen ist die Dichte des gekühlten Abgases höher, so dass mehr Gemischmasse dem Motor zugeführt wird. Durch die Kühlung ist es daher möglich, die Abgasrückführung als alleinige Maßnahme oder als Hauptmaßnahme zur Klopfregelung zu verwenden. Daher wird erfindungsgemäß mittels eines Sensors die Möglichkeit des Auftretens von Klopfen ermittelt und beim auftreten oder beim möglichen auftreten von Klopfen gekühltes Abgas zurückgeführt.

In einer Variante des erfindungsgemäßen Verfahrens wird als Sensor ein Klopfsensor eingesetzt, der beispielsweise auf einem Beschleunigungssensor oder Körperschallsensor basiert. Vorteilhaft wird beim auftreten von Klopfen die Menge oder der Anteil zurückgeführten gekühlten Abgases erhöht. Sobald das Klopfen nachlässt, wird die Menge oder der Anteil nicht weiter erhöht. Bleibt das Klopfen aus, wird die Menge oder der Anteil zurückgeführten gekühlten Abgases stufenweise verringert, bis die Klopfgrenze erreicht wird.

In einer anderen Variante des erfindungsgemäßen Verfahrens wird als Sensor ein Methanzahlensensor verwendet, der die Methanzahl des Gases ermittelt. Abhängig von der Methanzahl und damit von der Möglichkeit des Auftretens von Klopfen wird vorab eine festgelegte Menge oder ein festgelegter Anteil von gekühltem Abgas bestimmt und zurückgeführt.

In einer besonders vorteilhaften Weiterbildung der anderen Variante des erfindungsgemäßen Verfahrens wird die Temperatur des zurückzuführenden Abgase bestimmt und abhängig von der Abgastemperatur und der Methanzahl des Gases vorab eine festgelegte Menge oder ein festgelegter Anteil von gekühltem Abgas bestimmt und zurückgeführt.

In einer bevorzugten Weiterbildung der anderen Variante des erfindungsgemäßen Verfahrens wird zusätzlich ein Klopfsensor eingesetzt. Zunächst wird anhand der Methanzahl des Gases und gegebenenfalls der Temperatur des zurückzuführenden Abgase ist eine Menge oder der Anteil des zurückzuführenden Abgases bestimmt. Anhand der vom Klopfsensor ermittelten Signale wird dann um diesen Arbeitspunkt herum die Menge oder der Anteil des zurückzuführenden Abgases angepasst.

Vorteilhaft wird das zurückzuführende Abgas unter 150 °C, bevorzugt unter 100 °C, besonders bevorzugt unter 80 °C gekühlt. Die dabei gewonnene Wärme kann für Heizzwecke im Blockheizkraftwerk verwendet werden. Bei Temperaturen unter 80 °C kann dabei die Kondensationswärme genutzt werden.

In einer Weiterbildung der Erfindung wird als zusätzliche Maßnahme, beispielsweise wenn die Menge des zurückführen Abgase ein Grenzwert überschritten hat, der Zündwinkel verstellt.

Die Erfindung wird nun anhand der Figur detailliert erläutert.

Es stellt dar:

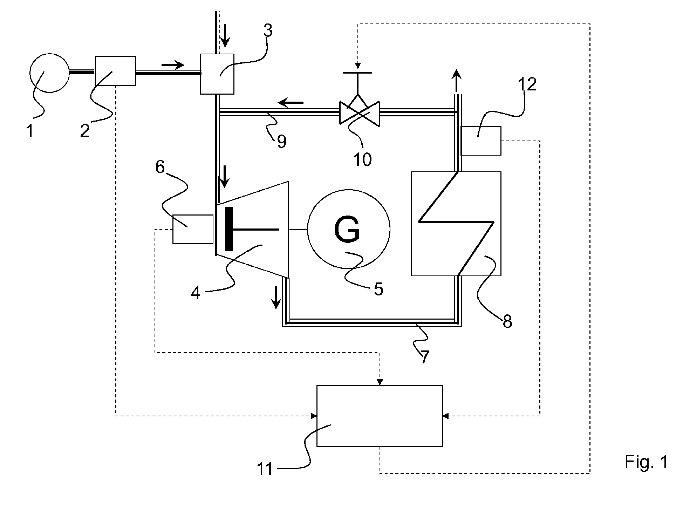

Figur 1: Das Schema eines Blockheizkraftwerks zur Durchführung des erfindungsgemäßen Verfahrens

Figur 1 zeigt das Schema eines Blockheizkraftwerks zur Durchführung des erfindungsgemäßen Verfahrens. Zur Erzeugung von elektrischer Energie treibt ein Verbrennungsmotor 4 einen Generator 5 an. Die dabei anfallende elektrische Energie wird in ein hier nicht dargestelltes elektrisches Netz eingespeist. Die im Verbrennungsmotor 4 entstehende Verlustwärme dient zur Beheizung eines Gebäudes oder zur Bereitung von Warmwasser. Eine Gasquelle 1 stellt Gas bereit, das als Brennstoff für den Verbrennungsmotor dient. Dieses Gas wird durch eine Mischeinrichtung 3 mit Luft vermischt und dem Verbrennungsmotor 4 zugeführt. Das Abgas des Verbrennungsmotors 4 wird durch einen Wärmetauscher 8 gekühlt. Die dabei anfallende Wärme wird ebenfalls zur Beheizung eines Gebäudes oder zur Bereitung von Warmwasser genutzt. An dem Verbrennungsmotor 4 ist ein Klopfsensor 6 vorgesehen. Dieser Klopfsensor 6 sensiert ein auftretendes Klopfen des Verbrennungsmotors und führt dieses Signal einem Steuergerät 11 zu. Alternativ oder zusätzlich wird die Methanzahl des von der Gasquelle bereitgestellten Gases mittels eines Methanzahlensensors 2 ermittelt und dem Steuergerät 11 zugeführt. Abhängig von einem durch den Klopfsensor 6 sensierten Klopfen und/oder von einer durch den Methanzahlensensor 2 sensierten Möglichkeit des Klopfens ermittelt das Steuergerät 11 eine Menge oder einen Anteil zurückzuführenden gekühlten Abgases und steuert das Abgasrückführungsventil 10 an. Dabei kann das Steuergerät auch die Temperatur des zurückzuführenden Abgases, welche durch einen Temperatursensor 12 gemessen wird, berücksichtigen. Je niedriger die Temperatur des zurückgeführten Abgases ist, desto wirksamer kann Klopfen verhindert werden, so dass bei niedrigen Abgastemperaturen weniger Abgas zurückgeführt werden muss. Das zurückzuführende Abgas wird über die Abgasrückführleitung 9 zurückgeführt und dem Gas oder dem Gas/Luft-Gemisch zugeführt und gelangt zusammen mit diesem in den Brennraum der Brennkraftmaschine 4.

### Bezugszeichenliste

- 1: Gasquelle
- 2: Methanzahlsensor
- 3: Mischeinrichtung
- 4: Verbrennungsmotor
- 5: Generator
- 6: Klopfsensor
- 7: Abgasleitung
- 8: Wärmetauscher
- 9: Abgasrückführleitung
- 10: Abgasrückführventil
- 11: Steuergerät
- 12: Temperatursensor

## Patentansprüche

1. Verfahren zur Klopfregelung an einer Brennkraftmaschine (4), insbesondere an einer in einem Blockheizkraftwerk verwendeten gasbetriebenen Brennkraftmaschine, **dadurch gekennzeichnet, dass** mittels eines Sensors (6, 2) die Möglichkeit des Auftretens von Klopfen ermittelt wird und dass beim Auftreten oder beim möglichen Auftreten von Klopfen gekühltes Abgas zurückgeführt wird.

2. Verfahren nach Anspruch 1, **dadurch gekennzeichnet, dass** als Sensor ein Klopfsensor (6) verwendet wird, der das Auftreten von Klopfen sensiert.

3. Verfahren nach Anspruch 2, **dadurch gekennzeichnet, dass** in einem Regelkreis beim Auftreten von Klopfen die Menge oder der Anteil zurückgeführten gekühlten Abgases erhöht und beim Ausbleiben von Klopfen verringert wird.

4. Verfahren nach Anspruch 1, **dadurch gekennzeichnet, dass** als Sensor ein Methanzahlsensor (2) verwendet wird, der die Methanzahl des Brenngases ermittelt und in Abhängigkeit von der Methanzahl die Menge oder der Anteil zurückgeführten gekühlten Abgases bestimmt wird.

5. Verfahren nach Anspruch 4, **dadurch gekennzeichnet, dass** bei der Bestimmung der die Menge oder des Anteil zurückgeführten Abgases die Temperatur des Abgases berücksichtigt wird.

6. Verfahren nach Anspruch 4 oder 5, **dadurch gekennzeichnet, dass** zusätzlich ein Klopfsensor (6) verwendet werden und dass in einem Regelkreis beim Auftreten von Klopfen die Menge oder der Anteil zurückgeführten gekühlten Abgases erhöht und beim Ausbleiben von Klopfen verringert wird.

7. Verfahren nach einem der vorhergehenden Ansprüche, **dadurch gekennzeichnet, dass** die Abgastemperatur unter 150 °C, bevorzugt unter 100 °C, besonders bevorzugt unter 80 °C gekühlt wird.

8. Verfahren nach einem der vorhergehenden Ansprüche, **dadurch gekennzeichnet, dass** als zusätzliche Maßnahme bei Auftreten von Klopfen und/oder bei der Möglichkeit des Auftretens von Klopfen der Zündzeitpunkt verstellt wird.
